# EUROPÄISCHE PATENTSCHRIFT

(11) **EP 0 937 661 B1**
(45) Veröffentlichungstag und Bekanntmachung des Hinweises auf die Patenterteilung: **27.11.2002**
(21) Anmeldenummer: 99102157.7
(22) Anmeldetag: 03.02.1999
(51) Int. Cl.: B65G 13/06, G01N 19/02

(54) **Antriebsrolleneinheit**
Drive roller unit
Unité de galets de propulsion

(30) Priorität: 20.02.1998 DE 19807230
(43) Veröffentlichungstag der Anmeldung: 25.08.1999
(73) Patentinhaber: Telair International GmbH, 83734 Hausham (DE)
(72) Erfinder: Huber, Thomas, 82393 Iffeldorf (DE); Dürrwächter, Martin, 83737 Irschenberg (DE); Kieser, Benedikt, 83714 Miesbach (DE); Urch, Matthias, 85586 Poing (DE)
(74) Vertreter: Bohnenberger, Johannes, Dr.

(56) Entgegenhaltungen:
- WO-A-96/28719
- US-A- 3 447 665

## Beschreibung

Die Erfindung betrifft einen Antriebsrolleneinheit zum Fördern von Gegenständen auf dem Frachtdeck eines Flugzeugs nach dem Oberbegriff des Patentanspruches 1, wie diese beispielsweise aus der US-A-3 447 665 bekannt ist.

Beim Be- und Entladen von Flugzeugen kommt es darauf an, daß die einzulagernden bzw. auszuladenden Gegenstände möglichst schnell aber sicher an ihre Plätze gebracht bzw. wieder aus dem Frachtraum heraustransportiert werden. Ein solcher Be- und Entladevorgang muß aber nicht nur in kurzer Zeit geschehen, er muß auch unter sehr unterschiedlichen Umständen erfolgen. Derartige Unterschiede liegen zum einen in der Ausgestaltung der Gegenstände selbst, die verschiedene Bodenstrukturen oder auch Befüllungsgewichte haben, sie liegen auch in der Position des Flugzeugs bzw. des Frachtdecks, das in verschiedenen Neigungswinkeln verlaufen kann, da die Standpositionen von Flugzeugen nicht immer optimal sind und auch durch die Beladungsgewichte schwanken. Weiterhin ist zu berücksichtigen, daß die Böden der zu transportierenden Gegenstände unterschiedliche Stabilität und auch Beschaffenheit hinsichtlich ihrer Rutschfestigkeit haben können. Feuchtigkeit oder Verschmutzung spielen hier eine große Rolle.

Schließlich spielt das zu Verfügung stehende Bedienungspersonal bei der hier zugrundeliegenden Problematik eine große Rolle. Um Kosten zu sparen möchte man mit möglichst wenig Personal auskommen, das darüber hinaus oftmals ungeübt ist und auch insbesondere aufgrund des Zeitdrucks unsorgfältig arbeitet.

Bei den herkömmlichen Systemen ist es zum größten Teil dem Bedienungspersonal überlassen, wie die Rollenantriebseinheiten gesteuert werden, wobei üblicherweise mit konstanten Förderparametern (insbesondere hinsichtlich Fördergeschwindigkeit, Anpreßdruck der Antriebsrollen usw.) ohne Berücksichtigung der oben genannten Unterschiedlichkeiten gearbeitet wird.

Der Erfindung liegt die Aufgabe zugrunde, eine Antriebsrolleneinheit der eingangs genannten Art dahingehend weiterzubilden, daß eine Optimierung der Traktionseigenschaften der Antriebsrolleneinheit sichergestellt wird.

Diese Aufgabe wird durch die im Patentanspruch 1 angegebenen Merkmale gelöst.

Ein wesentlicher Gedanke der Erfindung liegt darin, daß eine Schlupfmessung vorgenommen wird, um festzustellen, ob zwischen der Antriebsrolle und dem Boden des zu fördernden Gegenstands eine Differenzgeschwindigkeit besteht. Aufgrund des Meßergebnisses wird dann entweder der Antriebsmotor und der Hubmotor oder nur der Hubmotor so geregelt, daß der Schlupf verschwindet. Dadurch wird sichergestellt, daß einerseits mit optimalen Geschwindigkeiten gefördert, andererseits aber der Verschleiß der Antriebsrolle minimiert werden. Dies erhöht die Betriebsdauer und damit die Sicherheit des gesamten Frachtladesystems, was in Bezug auf den hier vorliegenden Anwendungsfall besonders wichtig ist.

Bei einer Ausführungsform der Erfindung umfaßt die Differenzgeschwindigkeitsmeßeinrichtung eine Meßrolle mit einem Umfangsgeschwindigkeitsmeßfühler, der insbesondere als Drehzahlmeßfühler ausgebildet sein kann. Diese Meßrolle wird mit dem Boden des zu fördernden Gegenstands in Eingriff gebracht, so daß sie unter dem Boden abrollt.

Die Meßrolle kann separat vorgesehen oder aber, wie dies auch nachfolgend genauer beschrieben wird, um die Drehachse der Antriebsrolle drehend bei dieser angebracht sein. Auf diese Weise ist sichergestellt, daß die Meßrolle exakt dort mißt, wo die Antriebsrolle mit dem Boden des zu fördernden Gegenstands in Eingriff gebracht wird.

Vorzugsweise ist die Antriebsrolle in zwei Teilrollen unterteilt, während die Meßrclle zwischen den Teilrollen angebracht ist. Durch diesen symmetrischen Aufbau ist gewährleistet, daß auch dann ein korrektes Meßsignal gebildet wird, wenn der zu befördernde Gegenstand nur zur Hälfte über die Antriebsrolle läuft.

Vorzugsweise ist die Meßrolle derart relativ zur Antriebsrolle angeordnet, daß sie beim Anheben der Antriebsrolle von der Ruhe- in die Arbeitsstellung den Boden des zu fördernden Gegenstands zeitlich vor der Antriebsrolle berührt. Dies kann auf besonders einfache Weise dadurch geschehen, daß bei dem genannten Aufbau, bei welchem die Meßrolle um die Drehachse der Antriebsrolle drehend bei dieser angebracht ist, die Meßrolle etwas dicker ist als die Antriebsrolle, wobei ihr Belag oder auch ihre Lagerung eine hinreichende Elastizität aufweist, um ein sicheres in Eingriffkommen der Antriebsrolle mit dem Boden des zu befördernden Gegenstands gewährleistet.

Vorzugsweise ist eine Kraftmeßreinrichtung zum Erzeugen eines der Steuerung zugeleiteten Kraftmeßsignals in Abhängigkeit von einer Anpreßkraft vorgesehen, mit welcher der Hubmotor die Antriebsrolle an den Boden des geförderten Gegenstandes drückt. Durch eine derartige Kraftmeßeinrichtung kann der Hubmotor so geregelt werden, daß die von der Antriebsrolle auf den Boden des zu fördernden Gegenstands aufgebrachte Kraft eine voreingestellte Maximalkraft nicht übersteigt. Diese Maximalkraft kann abhängig von der Art des zu fördernden Gegenstands (automatisch oder manuell) vorgegeben werden, um optimale Traktionseigenschaften sicherzustellen und auch den Boden des zu fördernden Gegenstands zu schonen.

Bei einer Ausführungsform der Erfindung wird weiterhin ein Hubhöhenmeßfühler vorgesehen, über welchen feststellbar ist, in welcher Höhe sich die Antriebsrolle gerade befindet. Dieser Meßfühler kann nicht nur verwendet werden, um die Antriebsrolle in eine vorbestimmte Höhe (z. B. in die abgesenkte Ruhestellung) zu bringen, er kann auch dazu verwendet werden, um in Zusammenhang mit dem Kraftmeßfühler die Elastizitätseigenschaften (Federkonstante) des Bodens des zu befördernden Gegenstands festzustellen, um auf diese Weise einen maximalen Belastungswert für den Eingriff der Antriebsrolle mit dem Boden vorzugeben.

Die Regeleinrichtung ist derart ausgebildet, daß die Hubeinrichtung bei Erkennen von Schlupf zum Anheben der Antriebsrolle angesteuert wird. Dadurch wird der Anpreßdruck erhöht, bis der Schlupf verschwindet.

Die Regeleinrichtung ist vorzugsweise derart ausgebildet, daß bei Erkennen eines Schlupfes das Antriebsmoment bzw. die Drehzahl des Antriebsmotors vermindert wird, bis der Schlupf verschwindet. Diese Verfahrensweise wird in Kombination mit der gerade zuvor beschriebenen Verfahrensweise angewendet.

Bei Vorhandensein eines Meßorgans für die Anpreßkraft ist die Regeleinrichtung vorzugsweise derart ausgebildet, daß bei Kontakt zwischen der Antriebsrolle und dem Boden des zu fördernden Gegenstands der Hubmotor so angesteuert wird, daß die Anpreßkraft im wesentlichen konstant gehalten wird. Wenn also ein Container zu fördern ist, dessen Boden durch (querverlaufende) Palettenbalken eine inhomogene Steifigkeit hat, so wird sichergestellt, daß die Antriebsrolle dem Profil des (belasteten) Bodens folgt.

Vorzugsweise ist die Regeleinrichtung derart ausgebildet, daß bei Erkennen von Schlupf zunächst die Anpreßkraft von einem voreingestellten niedrigeren Normalwert bis zu einem vorgegebenen höheren Maximal-Anpreßwert ohne Veränderung der Ansteuerung des Antriebsmotors erhöht wird. Ist bei Erreichen des maximalen Anpreßwertes immer noch ein Schlupf vorhanden, so wird dann die Drehzahl bzw. das Antriebsmoment des Antriebsmotors vermindert, bis kein Schlupf mehr vorliegt.

Die Ansteuerung der Antriebsrolleneinheit erfolgt vorzugsweise durch Vorgabe eines Soll-Geschwindigkeitswertes, den der zu fördernde Gegenstand haben bzw. erreichen soll. In an sich bekannter Weise wird dieser Soll-Wert mit dem durch die Geschwindigkeitsmeßeinrichtung festgestellten Ist-Wert verglichen, so daß der Antriebsmotor dann entsprechend der festgestellten Abweichung geregelt werden kann.

Nachfolgend wird eine Ausführungsform der Erfindung anhand von Abbildungen näher erläutert. Hierbei zeigen:
- Fig. 1: ein Ausführungsform einer Antriebsrolleneinheit in einem Teil-Vertikalschnitt,
- Fig. 2: ein Draufsicht auf die Anordnung nach Fig. 1 und
- Fig. 3: einen Teilschnitt durch den in Fig. 2 mit III bezeichneten Ausschnitt der Antriebsrolle.

In der nachfolgenden Beschreibung werden für gleiche und gleichwirkende Teile dieselben Bezugsziffern verwendet.

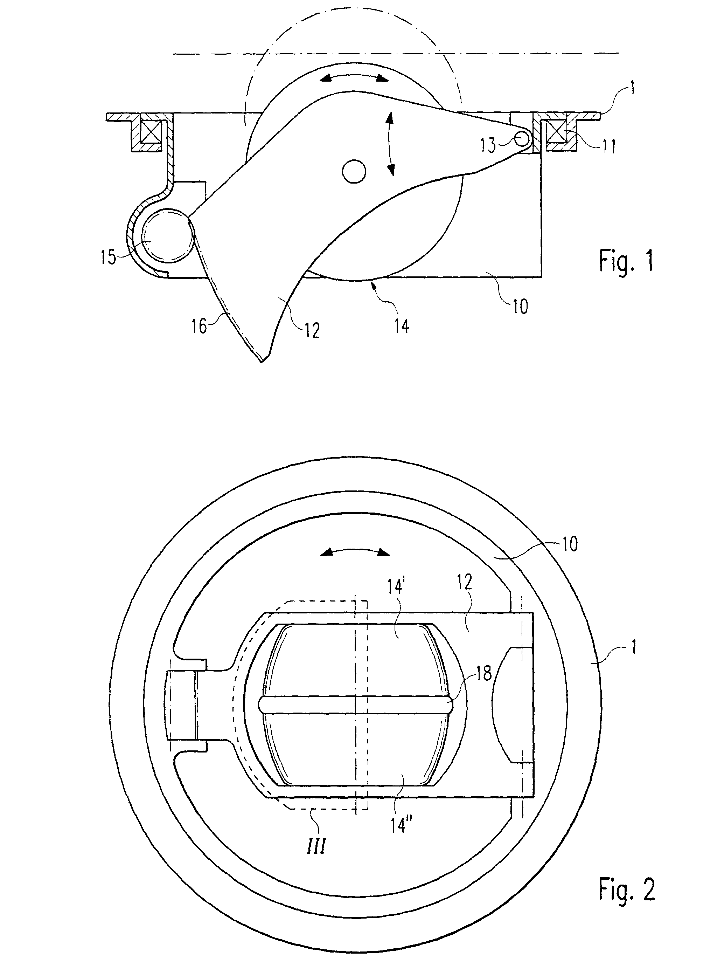

Bei der in den Fig. 1 und 2 gezeigten Ausführungsformen der erfindungsgemäßen Antriebsrolleneinheit ist in einem Frachtdeck ein topfförmiger Rahmen 10 über ein Lager 11 und einen Lagerring 1 drehbar gelagert. In dem Rahmen 10 ist eine Schwinge 12 um einen im wesentlichen vertikalen (also parallel zum Frachtdeck 1) angeordneten Bolzen 13 auf- und abschwenkbar gelagert. Die Schwinge 12 trägt eine Antriebsrolle 14, welche in ihrem Inneren einen sie treibenden Antriebsmotor (nicht gezeigt) aufweist. Zum Verschwenken der Schwinge 12 ist ein Hubmotor 15 am Rahmen 10 befestigt, der ein Ritzel aufweist, welches mit einem Zahnkranzsegment 16 an der Schwinge 12 kämmt.

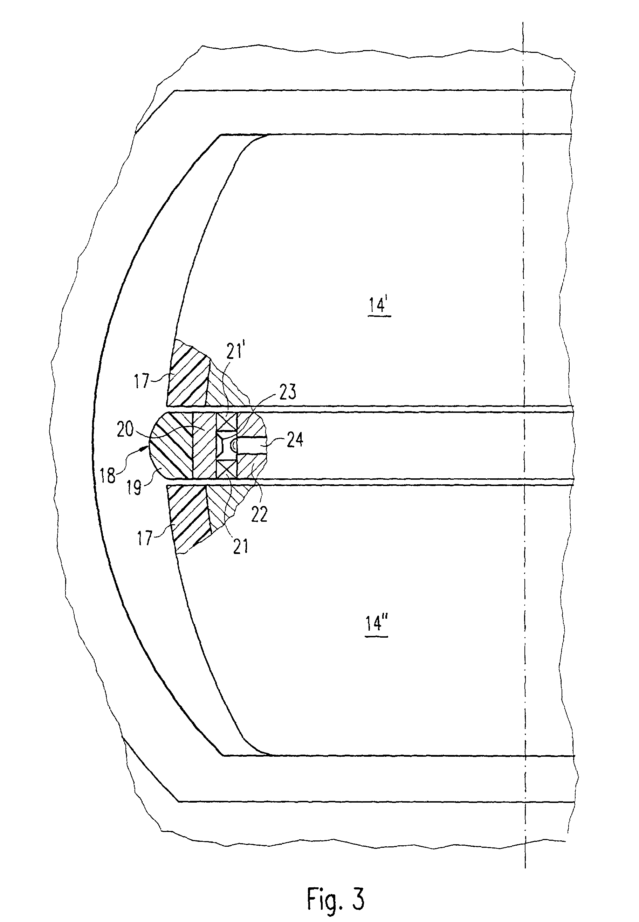

Die Antriebsrolle 14 ist - wie in Fig. 3 dargestellt - in zwei Teilrollen 14' und 14" unterteilt, die miteinander starr verbunden sind und vom (nicht gezeigten) Antriebsmotor angetrieben werden. Die Antriebsrolle 14' und 14" weisen jeweils einen Reibbelag 17 auf.

Zwischen den Teilantriebsrollen 14' und 14" ist eine Meßrolle 18 gelager. Die Meßrolle 18 weist ebenfalls einen Reibbelag 19 auf, der über die Mantelfläche des Belags 17 der Teilantriebsrollen 14' und 14" übersteht. Der Belag 19 sitzt auf einem Trägerring 20, der über Lager 21 und 21' auf einem Basisring 22 drehbar gelagert ist. Der Basisring 22 ist drehfest mit der Schwinge 12 verbunden.

An seiner Innenseite weist der Ring 20 Marken 23 rings um seinen Umfang gleichmäßig verteilt auf, deren Vorbeiwandern an einer Fühlereinrichtung 24 von dieser feststellbar ist. Auf diese Weise ist ein Drehzahlfühler gebildet.

Es ist ein weiterer Drehzahlfühler innerhalb der Antriebsrolle 14 vorgesehen (dieser ist nicht gezeigt), der die Drehzahl bzw. die Umfangsgeschwindigkeit der Teilantriebsrollen 14' und 14" erfaßt. Im Schwenkbolzen 13 ist ein Kraftmeßfühler vorgesehen, der ein Ausgangssignal bildet, welches ein Maß für die Anpreßkraft ist, welche die Antriebsrolle 14 auf den Boden eines (nicht gezeigten) zu befördernden Gegenstands ausübt.

Wenn ein Gegenstand über der Rollenantriebseinheit ankommt, wird die Antriebsrolle 14 über ein Verschwenken der Schwinge 12 durch den Hubmotor 15 aus ihrer (in Fig. 1 mit durchgezogenen Linien gezeigten) Ruhestellung in eine Arbeitsstellung hochgehoben, in welcher die Antriebsrolle 14 bzw. die Teilantriebsrollen 14' und 14'' sowie die Meßrolle 18 mit dem Boden des zu befördernden Gegenstands in Eingriff gelangen. Bevor die Teilantriebsrollen 14' und 14" in Eingriff mit dem Boden gelangen, wird die Meßrolle 18 entsprechend der Geschwindigkeit des zu befördernden Containers beschleunigt.

Der Antriebsmotor wird entsprechend einem Vorgabewert für eine Soll-Geschwindigkeit des Gegenstands abzüglich dessen Ist-Geschwindigkeit (gemessen durch die Meßrolle 18) angesteuert. Über den im Schwenkbolzen 13 vorgesehenen Meßfühler wird die Anpreßkraft bestimmt und dann erhöht, wenn eine Differenzgeschwindigkeit zwischen der Meßrolle 18 und den Teilantriebsrollen 14' und 14" festgestellt wird, also ein Schlupf vorliegt. Dieses Anheben der Antriebsrolle geschieht natürlich nur bis zu einem Maximalwert, da Schäden (an der Antriebsrolleneinheit sowie am zu befördernden Gegenstand) auftreten könnten. Ist bei diesem Maximalwert immer noch ein Schlupf festzustellen, so wird der Antriebsmotor heruntergeregelt, bis der Schlupf verschwindet.

In Fig. 1 ist mit einer unterbrochenen horizontalen Linie die "Normalposition" eines glatten Containerbodens gezeigt, der durch weitere Förderelemente (passive Rollen, Kugelmatten oder dergleichen) definiert ist. Aus dieser Abbildung geht auch hervor, daß die Antriebsrolle 14 erheblich höher als bis zu diesem Niveau angehoben werden kann, um auf diese Weise Unebenheiten oder ein Durchbiegen des Containerbodens zu kompensieren, um dadurch eine Traktionsoptimierung zu erreichen.

Aus obigem geht hervor, daß die vorliegende Erfindung nicht nur eine Antriebsrolleneinheit sondern auch ein Verfahren zum Steuern bzw. Regeln einer solchen betrifft.

## Patentansprüche

1. Antriebsrolleneinheit zum Förder von Gegenständen auf dem Frachtdeck (1) eines Flugzeugs mit
einem Antriebsmotor zum Antreiben einer Antriebsrolle (14), die mit einem Boden eines zu fördernden Gegenstandes in einer Arbeitsstellung in reibschlüssige Verbindung bringbar ist;
einer Hubeinrichtung (12) mit einem Hubmotor (15), mittels dessen die Antriebsrolle (14) von einer abgesenkten Ruhestellung in die angehobene Arbeitsstellung bringbar ist;
mit einer Steuerung zum Steuern des Antriebsmotors und des Hubmotors (15);
**gekennzeichnet durch**
eine Differenzgeschwindigkeitsmeßeinrichtung (18) zum Messen einer Differenzgeschwindigkeit zwischen der Antriebsrolle (14) und einem gerade geförderten Gegenstand , der sich über oder auf der Antriebsrolle (14) befindet, wobei die Steuerung eine Regeleinrichtung umfaßt, welcher die Signale der Differenzgeschwindigkeitsmeßeinrichtung (18) zugeleitet werden und welche entweder den Antriebsmotor und den Hubmotor (15) oder nur den Hubmotor (15) zur Vermeidung eines Schlupfes zwischen der Antriebsrolle (14) und dem Boden des zu befördernden Gegenstandes regelt.

2. Antriebsrolleneinheit nach Anspruch 1,
**dadurch gekennzeichnet, daß**
die Differenzgeschwindigkeitsmeßeinrichtung eine Meßrolle (18) mit einem Umfangsgeschwindigkeitsmeßfühler (23, 24), insbesondere einem Drehzahlfühler umfaßt, die mit dem Boden des zu befördernden Gegenstands in Eingriff bringbar ist.

3. Antriebsrolleneinheit nach Anspruch 2,
**dadurch gekennzeichnet, daß**
die Meßrolle (18) um die Drehachse (X) der Antriebsrolle (14) drehend bei dieser angebracht ist.

4. Antriebsrolleneinheit nach Anspruch 3,
**dadurch gekennzeichnet, daß**
die Antriebsrolle (14) in zwei Teilrollen (14', 14") geteilt aufgebaut und die Meßrolle (18) zwischen den Teilrollen (14', 14") angebracht ist.

5. Antriebsrolleneinheit nach einem der Ansprüche 2 bis 4,
**dadurch gekennzeichnet, daß**
die Meßrolle (18) derart relativ zur Antriebsrolle (14) angeordnet ist, daß sie beim Anheben der Antriebsrolle (14) von der Ruhe- in die Arbeitsstellung den Boden des zu fördernden Gegenstands zeitlich vor der Antriebsrolle (14) berührt.

6. Antriebsrolleneinheit nach einem der vorhergehenden Ansprüche,
**gekennzeichnet durch**
eine Kraftmeßeinrichtung (15) zum Erzeugen eines der Steuerung zugeleiteten Kraftmeßsignals in Abhängigkeit von einer Anpreßkraft, mit welcher der Hubmotor (15) die Antriebsrolle (14) an den Boden des geförderten Gegenstands drückt.

7. Antriebsrolleneinheit nach einem der vorhergehenden Ansprüche,
**dadurch gekennzeichnet, daß**
die Regeleinrichtung derart ausgebildet ist, daß die Hubeinrichtung (12, 15) bei Erkennen von Schlupf zum Anheben der Antriebsrolle (14) angesteuert wird.

8. Antriebsrolleneinheit nach einem der vorhergehenden Ansprüche,
**dadurch gekennzeichnet, daß**
die Regeleinrichtung derart ausgebildet ist, daß bei Erkennen eines Schlupfes das Antriebsmoment bzw. die Drehzahl des Antriebsmotors vermindert wird.

9. Antriebsrolleneinheit nach Anspruch 6,
**dadurch gekennzeichnet, daß**
die Regeleinrichtung derart ausgebildet ist, daß die Anpreßkraft bei Kontakt zwischen der Antriebsrolle (14) und dem Boden des zu fördernden Gegenstands mittels geeigneter Ansteuerung des Hubmotors (15) im wesentlichen konstant gehalten wird.

10. Antriebsrolleneinheit nach Anspruch 6,
**dadurch gekennzeichnet, daß**
die Regeleinrichtung derart ausgebildet ist, daß bei Erkennen von Schlupf zunächst die Anpreßkraft von einem voreingestellten niedrigeren Normalanpreßwert bis zu einem vorgegebenen höheren Maximalanpreßwert ohne Veränderung der Ansteuerung des Antriebsmotor erhöht und das Antriebsmoment bzw. die Drehzahl des Antriebsmotors erst nach Erreichen des Maximal-Anpreßwertes vermindert wird, bis kein Schlupf mehr vorliegt.

## Claims

1. A drive roller unit for conveying articles on the freight deck (1) of an aircraft, with a
drive motor for driving a drive roller (14) which can be brought into an operative position in frictional connection with a base of an article to be conveyed;
a lifting device (12) with a lifting motor (15) by means of which the drive roller (14) can be brought from a lowered rest position into the raised operative position;
with a control means for controlling the drive motor and the lifting motor (15);
**characterised by**
a differential speed measuring device (18) for measuring a differential speed between the drive roller (14) and an article just conveyed which is situated above or on the drive roller (14), wherein the control means comprises a regulating device, to which the signals of the differential speed measuring device (18) are fed, and which controls either the drive motor and the lifting motor (15) or only the lifting motor (15) so as to prevent any slip between the drive roller (14) and the base of the article to be conveyed.

2. A driver roller unit according to Claim 1,
**characterised in that** the differential speed measuring device is a measuring roller (18) with a circumferential speed measuring sensor (23,24), in particular a rotational speed sensor, which device can be brought into engagement with the base of the article to be conveyed.

3. A driver roller unit according to Claim 2,
**characterised in that** the measuring roller (18) is mounted to rotate about the axis of rotation (X) of the drive roller (14).

4. A driver roller unit according to Claim 3,
**characterised in that** the drive roller (14) is designed to be divided into two partial rollers (14',14") and the measuring roller (18) is mounted between the partial rollers (14',14").

5. A driver roller unit according to any one of Claims 2 to 4, **characterised in that** the measuring roller (18) is so arranged relative to the drive roller (14) that, when the drive roller (14) is raised from the rest position into the operative position, it contacts the base of the article to be conveyed earlier than the drive roller (14).

6. A driver roller unit according to any one of the preceding Claims, **characterised by** a force-measuring device (15) for generating a force-measuring signal fed to the control means as a function of a contact force with which the lifting motor (15) presses the drive roller (14) against the base of the conveyed article.

7. A driver roller unit according to any one of the preceding Claims, **characterised in that** the regulating device is so designed that when slip is detected the lifting device (12,15) is activated to raise the drive roller (14).

8. A driver roller unit according to any one of the preceding Claims, **characterised in that** the regulating device is so designed that when slip is detected the drive torque or the speed of rotation of the drive motor is decreased.

9. A driver roller unit according to Claim 6,
**characterised in that** the regulating device is so designed that the contact force upon contact between the drive roller (14) and the base of the article to be conveyed is kept substantially constant by suitable activation of the lifting motor (15).

10. A driver roller unit according to Claim 6,
**characterised in that** the regulating device is so designed that when slip is detected firstly the contact force is increased from a preset lower normal contact value to a predetermined higher maximum contact value, without varying the activation of the drive motor, and the drive torque or the speed of rotation of the drive motor is decreased only after attaining the maximum contact value until slip is no longer present.

## Revendications

1. Unité à galet d'entraînement pour le transport d'objets sur le plancher de la soute (1) d'un avion, comportant
un moteur d'entraînement pour entraîner un galet d'entraînement (14) qui peut être amené en liaison par friction avec le fond d'un objet à transporter, dans une position de travail ;
un dispositif de levage (12) avec un moteur de levage (15) au moyen duquel le galet d'entraînement (14) peut être amené d'une position de repos abaissée à la position de travail relevée ;
comportant une commande pour la commande du moteur d'entraînement et du moteur de levage (15),
**caractérisée par**
un dispositif de mesure (18) de la vitesse différentielle pour mesurer une vitesse différentielle entre le galet d'entraînement (14) et un objet en cours de transport qui se trouve au-dessus ou sur le galet d'entraînement (14), la commande comprenant un dispositif de régulation auquel sont acheminés les signaux du dispositif de mesure (18) de la vitesse différentielle et qui régulent soit le moteur d'entraînement et le moteur de levage (15), soit uniquement le moteur de levage (15) pour éviter un glissement entre le galet d'entraînement (14) et le fond de l'objet à transporter.

2. Unité à galet d'entraînement selon la revendication 1,
**caractérisée en ce que** le dispositif de mesure de la vitesse différentielle comprend un galet de mesure (18) avec un capteur de mesure (23, 24) de la vitesse périphérique, en particulier un capteur de la vitesse de rotation, lequel galet de mesure peut être amené en prise avec le fond de l'objet à transporter.

3. Unité à galet d'entraînement selon la revendication 2,
**caractérisée en ce que** le galet de mesure (18) est placé sur le galet d'entraînement (14) de manière à tourner autour de l'axe de rotation (X) de ce dernier.

4. Unité à galet d'entraînement selon la revendication 3,
**caractérisée en ce que** le galet d'entraînement (14) est divisé en deux galets partiels (14', 14") et le galet de mesure (13) est placé entre les galets partiels (14', 14").

5. Unité à galet d'entraînement selon l'une des revendications 2 à 4,
**caractérisée en ce que** le galet de mesure (18) est disposé par rapport au galet d'entraînement (14) de manière à venir en contact avec le fond de l'objet à transporter, avant le galet d'entraînement (14), lorsque ce dernier est relevé de la position de repos à la position de travail.

6. Unité à galet d'entraînement selon l'une des revendications précédentes,
**caractérisée par** un dispositif de mesure de force (15) pour produire un signal de mesure de force envoyé à la commande, en fonction d'une force de pression par laquelle le moteur de levage (15) presse le galet d'entraînement (14) contre le fond de l'objet transporté.

7. Unité à galet d'entraînement selon l'une des revendications précédentes,
**caractérisée en ce que** le dispositif de régulation est conçu de manière que le dispositif de levage (12, 15) soit commandé, lorsqu'est reconnu un glissement, pour le relevage du galet d'entraînement (14).

8. Unité à galet d'entraînement selon l'une des revendications précédentes,
**caractérisée en ce que** le dispositif de régulation est conçu de manière que lorsqu'est reconnu un glissement, le couple d'entraînement ou la vitesse de rotation du moteur d'entraînement est réduit.

9. Unité à galet d'entraînement selon la revendication 6,
**caractérisée en ce que** le dispositif de régulation est conçu de manière qu'en cas de contact entre le galet d'entraînement (14) et le fond de l'objet à transporter, la force de pression est maintenue sensiblement constante, par une commande appropriée du moteur de levage (15).

10. Unité à galet d'entraînement selon la revendication 6,
**caractérisée en ce que** le dispositif de régulation est conçu de manière que lorsqu'est reconnu un glissement, la force de pression est d'abord accrue d'une valeur normale de pression plus basse, réglée préalablement, jusqu'à une valeur de pression maximale plus élevée prédéfinie, sans modification de la commande du moteur d'entraînement, et le couple d'entraînement ou la vitesse de rotation du moteur d'entraînement n'est réduit qu'après qu'a été atteinte la valeur de pression maximale, jusqu'à ce qu'il ne se produise plus de glissement.
